# EUROPEAN PATENT APPLICATION

(11) **EP 3 139 032 A1**
(43) Date of publication of application: **08.03.2017**
(21) Application number: 15183544.4
(22) Date of filing: 02.09.2015
(51) Int. Cl.: F03D 1/00, B66C 1/10, F03D 1/06

(54) **SEGMENTED ROTOR BLADE OF A WIND TURBINE**

(71) Applicant: Siemens Aktiengesellschaft, 80333 München (DE)
(72) Inventor: Stiesdal, Henrik, 5000 Odense C (DK)

(57) **Abstract**

The invention relates to a rotor blade (10) of a wind turbine comprising an inner segment (20), an outer segment (30) and a connection piece (40). The inner segment (20) is defined as being the segment which is closer to the root (111) of the rotor blade (10) than the outer segment (30). Each segment (20, 30) comprises an inner end section (21, 31) and an outer end section (22, 32). The inner end section (21, 31) of a segment (20, 30) is defined as being the section which is closer to the root (111) of the rotor blade (10) than the respective outer end section (22, 32). The connection piece (40) interconnects the outer end section (22) of the inner segment (20) with the inner end section (31) of the outer segment (30). The connection piece (40) comprises means for attaching a lifting device to the rotor blade (10), wherein the lifting device is destined for lifting the rotor blade (10). The invention furthermore relates to a wind turbine comprising at least one such rotor blade (10).

## Description

The present invention relates to a rotor blade of a wind turbine comprising an inner segment, an outer segment and a connection piece. The invention furthermore relates to a wind turbine comprising at least one such rotor blade. In particular, the invention relates to the problem of establishing a safe grip on a rotor blade of a wind turbine when lifting the rotor blade with a crane for installation, replacement or relocation purposes.

Due to the complex shape of a wind turbine rotor blade, with an irregular tapering from the broadest part near the root of the rotor blade towards the tip of the rotor blade, lifting of the rotor blade is not straightforward. Furthermore, due to the relatively thin wall thickness of the shell of a modern rotor blade, loads need to be distributed over a large area of the surface when supporting the rotor blade.

For relocation close to the ground, for instance when handling a rotor blade in the factory or at the installation site, rotor blades are normally lifted in slings. For such lifts rotor blades are typically placed horizontally on the ground with the leading edge downwards and the trailing edge upwards. In this way the shape of the rotor blade helps maintaining stability when suspended in the sling, and since the sling is open at the upper end, forces from the sling are not imposed on the typically rather fragile trailing edge of the rotor blade.

Simple sling arrangements are normally avoided for lifting the rotor blade at height, mainly because the maneuverability is severely limited, since the rotor blade can be lifted in one position only, namely horizontally, with the leading edge pointing downwards. In addition, a sling lift is simply not considered sufficiently safe for lifting at height. A minor malfunction of the lifting equipment could lead to a sling sliding off the rotor blade, which in turn could well lead to risk to personnel and the loss of the rotor blade.

Consequently, for lifting at height rotor blades are normally suspended under or carried in large, specialized lifting yokes. These specialized lifting yokes for large wind turbine rotor blades are very considerable pieces of equipment, requiring large investments and highly trained operators. Particularly when removing a rotor blade for repair purposes the attachment of a lifting yoke is a complex process which puts big demands on the skills of the operators.

This invention aims to present an advantageous alternative to the currently existing ways of lifting a rotor blade of a wind turbine. The drawbacks as mentioned above are overcome by providing a rotor blade as specified in the independent claim 1. Advantageous modifications and amendments are described in the dependent claims.

According to the invention, there is provided a rotor blade of a wind turbine, wherein the rotor blade comprises an inner segment, an outer segment and a connection piece. The inner segment is defined as the segment which is closer to the root of the rotor blade than the outer segment. Each segment, i.e. the inner segment and the outer segment, comprises an inner end section and an outer end section. The inner end section of a segment is defined as the section which is closer to the root of the rotor blade compared to the outer end section. The connection piece interconnects the outer end section of the inner segment with the inner end section of the outer segment. The connection piece furthermore comprises means for attaching a lifting device to the rotor blade, wherein the lifting device is destined for lifting the rotor blade.

It has been realized by the inventor that a connection piece of a segmented rotor blade cannot only be used to connect the adjacent segments of the rotor blade, but can also be used to provide attachment means for the lifting device such as a lifting yoke to the rotor blade. Thus, the connection piece is not only used as a joint for the segments of the rotor blade but also represents a permanently installed means for attaching the lifting yoke to the rotor blade. Such a connection piece featuring this twofold functionality may also be referred to as a lifting bracket. The lifting bracket becomes an integral and permanent part of the rotor blade. It allows the on-site assembly of a rotor blade which has been manufactured and transported in at least two separate parts.

Note that the rotor blade comprises at least two segments which are interconnected by the connection piece. Alternatively, it may also comprise more than two segments which are joined together in order to represent the finalized and operating rotor blade.

The terms "inner" and "outer" refer to the radial position along the span of the rotor blade. The so called innermost position of the rotor blade is represented by the root of the rotor blade. The outermost position of the rotor blade is represented by the tip of the rotor blade. The reference to the "radial" positions is based on a mounted rotor blade, i.e. a rotor blade which is mounted to a hub of a wind turbine, the center of the hub representing the origin of the rotating rotor blades which are rotating about this origin.

The means for attaching a lifting device to the rotor blade may be realized in different structural embodiments. This will be explained in more detail and by referring to various concrete examples in the following. It is common to all embodiments that the connection piece comprises attachment means which are suitable for the attachment of a lifting device and, thus, the rotor blade can be lifted upwards. As a consequence, the attachment means have to be designed and manufactured such that they are able to carry the considerable forces and loads which are acting on the attachment means during lifting of the rotor blade.

Also note that the lifting of the rotor blade primarily refers to the lift from the ground up to the hub of the wind turbine or from the deck of a ship up to the hub of the wind turbine. However, such attachment means may also advantageously be used for relocation of the rotor blade within a factory hall, onto a truck, on an installation site, in a harbor, on a ship, or at any other location where lifting of the blade may be relevant. In these cases the rotor blade may only needed to be lifted by a short height, such as a few meters. Still, the forces and loads acting on the attachment means are considerable and the provision of a rotor blade with attachment means according to the invention is advantageous.

It may be advantageous if the shape of the outer surface of the connection piece substantially corresponds to the shape of the outer surface of the outer end section of the inner segment and to the shape of the outer surface of the inner end section of the outer segment.

In other words, it is beneficial if the shape of the connection piece substantially follows the shape of the adjacent parts of the inner segment and the outer segment, respectively. This ensures beneficial aerodynamic properties.

As the cross section of the outer end section of the inner segment and the cross section of the inner end section of the outer segment typically correspond to an airfoil profile which is able to generate lift, also the cross section of the connection piece advantageously shows such a lift generating airfoil profile.

The inner end section of the outer segment comprises the so called inner end which is defined to be the radially most inward position of the outer segment. The inner end section of the outer segment furthermore comprises that part of the outer segment which is in close proximity to the inner end of the outer segment. Quantitatively, the inner end section of the outer segment could be understood as comprising the radially most inward 5% of the outer segment.

Likewise, the outer end section of the inner segment refers to the part of the inner segment which is in close proximity of the radially outermost position of the inner segment. Again, quantitatively, the outer end section of the inner segment could be understood as comprising the radially most outward 5% of the inner segment. These definitions of the end sections are useful to describe characteristic features of the connection piece and to describe the shape of the outer surfaces of the inner segment and the outer segment.

Advantageously, the connection piece comprises a plurality of through-holes for inserting connection means for interconnecting the inner segment, the outer segment and the connection piece with each other.

These through-holes can thus be used to insert a bolt, a screw or the like to the connection piece and thus attach the connection piece to the inner segment and the outer segment.

In particular, it is advantageous if the connection piece comprises a pressure side rim with through-holes and/or a suction side rim with through-holes. These through-holes have the purpose of connecting the shells of the inner segment and the outer segment to the connection piece. This concept is beneficial because many modern wind turbine blades comprise a considerable cavity inside the rotor blade. In other words, they comprise a rather thin shell at which the connection piece is advantageously attached.

Additionally or alternatively, the connection piece comprises a cross-piece for interconnection of the shear webs of the inner segment and outer segment with the connection piece.

Again, most modern wind turbine rotor blades comprise shear webs and/or spars which extend in the radial direction inside the rotor blade. These shear webs represent another favorable part at which the connection piece can be attached to. Thus, it is advantageous that the connection piece comprises one or more cross-pieces, and in particular that such cross-pieces features through-holes, for interconnecting the shear webs of the inner segment and outer segment with the connection piece.

The attachment means, i.e. the means for attaching the lifting device to the rotor blade, may be realized in different ways.

One option is to provide an attachment hole for attaching the lifting device to the connection piece. The attachment hole is advantageously located close to the leading edge of the rotor blade. There may also be provided another attachment hole, i.e. a second attachment hole, which is for example located close to the trailing edge of the rotor blade. Such a configuration with a first attachment hole at the leading edge of the rotor blade and a second attachment hole at the trailing edge of the rotor blade allows fixing and attaching of the lifting device to the connection piece such that the rotor blade is retained in a stable manner.

Another option is the provision of an elevated rim at the connection piece such that the outer surface of the connection piece is elevated with regard to the outer surface of the outer end section of the inner segment and the outer surface of the inner end section of the outer segment.

Such an elevated rim allows the lifting device to grip on the connection piece. This elevated rim may extend along the whole chordwise extension on one or both sides of the rotor blade, i.e. the pressure side and/or the suction side of the rotor blade. The height of the rim may be chosen such that the lifting device, such as a lifting yoke, touches the surface, i.e. the outer surface, of the inner and outer segment. Alternatively, the lifting device only grips at a part of the rim without touching the outer surfaces of the segments.

In another option, the rim is designed such that it overlaps at least partly the inner segment or outer segment. This has the advantage that the connection piece also facilitates alignment of the segments during joining the two segments.

Finally, the invention is also directed towards a wind turbine comprising at least one of such a segmented rotor blade with such a connection piece.

Embodiments of the invention are now described, by way of example only, with reference to the accompanying drawings, of which:
- Figure 1: shows a segmented rotor blade;
- Figure 2: shows a connection piece in a first embodiment;
- Figure 3: shows a cross-sectional view of the connection piece of the first embodiment;
- Figure 4: shows a second embodiment of a connection piece; and
- Figure 5: shows an alternative of the second embodiment.

The illustration in the drawings is in schematic form. It is noted that in different figures, similar or identical elements may be provided with the same reference signs.

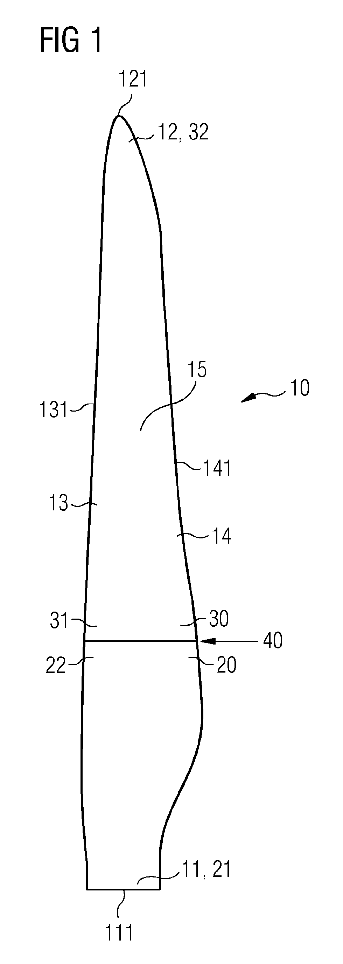

Figure 1 shows a rotor blade 10 of a wind turbine. The rotor blade 10 consists of two segments, namely the inner segment 20 and the outer segment 30. Alternatively, a rotor blade may also consist of more than two segments, e.g. three, four or even more segments.

The rotor blade 10 extends from a root section 11 to a tip section 12. The most distal region of the root section 11 is referred to as the root 111 of the rotor blade 10. The root 111 is also referred to as the innermost part of the rotor blade 10. Likewise, the tip 121 is the radially outermost part of the rotor blade 10. The tip 121 is a part of the tip section 12 of the rotor blade 10.

The terms "inner" and "outer" refer to radial positions once the rotor blade is installed at a hub of the wind turbine. In other words, the inner section of a rotor blade is closer to the hub and the root 111 of the rotor blade 10 than the outer section of the rotor blade.

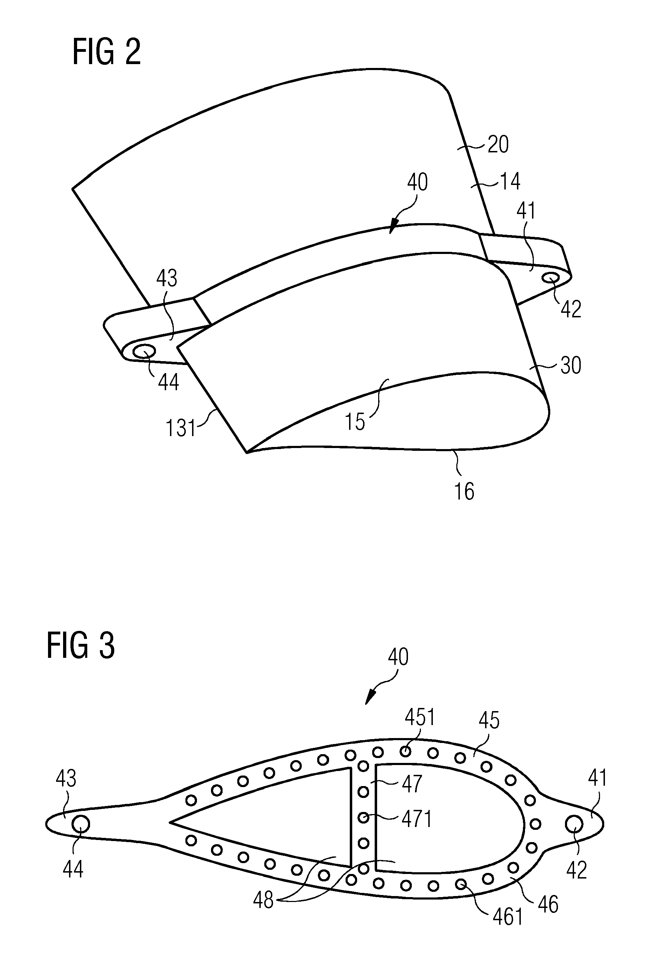

The inner segment 20 is connected with the outer segment 30 by a connection piece 40. In Figure 1, the connection piece 40 is sketched by a mere line. The connection piece 40, in particular its radial extension and its specific configuration are shown in more detail in Figures 2 to 5.

The rotor blade 10 comprises a leading edge section 14 with a leading edge 141 and a trailing edge section 13 with a trailing edge 131.

Another feature which typically is used for describing and characterizing a rotor blade of a wind turbine is the reference to the pressure side and the suction side of the rotor blade. In Figure 1 a top view of the rotor blade on the suction side 15 is shown. Consequently, the pressure side is on the opposite side and is thus not directly visible in Figure 1.

Two end sections can be attributed to both segments, the inner segment 20 and the outer segment 30. The radially more inward located section of the first segment 20 is referred to as the inner end section 21. In the example of Figure 1, the inner end section 21 coincides with the root section 11 of the rotor blade 10. Opposite to the inner end section 21 of the inner segment 20, the outer end section 22 of the inner segment 20 is located. Likewise, the outer segment 30 also comprises an inner end section 31 and an outer end section 32. Again, the outer end section 32 of the outer segment 30 coincides with the tip section 12 of the rotor blade 10.

Thus, the connection piece 40 connects in particular the outer end section 22 of the inner segment 20 with the inner end section 31 of the outer segment 30.

Figure 2 shows a perspective view of a part of a rotor blade of a wind turbine. A first embodiment of the connection piece 40 is depicted in Figure 2. As shown in Figure 1, the connection piece 40 connects the inner segment 20 of the rotor blade with the outer segment 30 of the rotor blade.

The lift generating profile which is also referred to as an airfoil profile of the rotor blade can be well distinguished in the perspective view of Figure 2. Also the suction side 15 and the pressure side 16 can be distinguished.

Back to the connection piece 40, it can be seen that the connection piece 40 essentially follows the shape of the inner segment 20 and the outer segment 30. This has the advantage that it represents an aerodynamically optimum shape.

Advantageously, the connection piece 40 joins the inner segment 20 and the outer segment 30 without any edges, rims or gaps. Furthermore, it can be seen that the connection piece 40 comprises a leading edge lifting boss 41 with a first attachment hole 42. Likewise, at the trailing edge section 13 of the rotor blade, it comprises a trailing edge lifting boss 43 with a second attachment hole 44. Both lifting bosses 41, 43 are firmly attached and connected to the remaining part of the connection piece 40. The attachment holes 42, 44, which are also referred to as shackle holes, allow the attachment of the lifting device, such as a lifting yoke, to the connection piece 40. Note that the connection piece 40 which has the shape of a lifting bracket in the embodiment shown in Figure 2, is permanently integrated into the rotor blade and thus not only allows an easy and reliable lifting of the rotor blade during initial installation of the rotor blade to the hub of the wind turbine, but also allows easy and reliable lifting of the rotor blade during any servicing or repair work at a later stage.

Figure 3 shows a cross sectional view of the connection piece 40 of the first embodiment of the invention. Figure 3 visualizes again the airfoil shape of the connection piece 40 which corresponds well to the shape, namely the cross sectional shape, of the rotor blade, at least in the region close to the joint of the two segments.

In Figure 3 it can be seen that the connection piece is not a massive plate extending from the trailing edge to the leading edge and from the pressure side to the suction side of the rotor blade, but it comprises a suction side rim 45 and a pressure side rim 46. These side rims 45, 46 correspond to the shell of the rotor blade, in particular of the shells of the inner segment and the outer segment. As the suction side rim 45 and the pressure side rim 46 each comprise through-holes, namely through-holes 451 and 461 a safe and reliable attachment and fixing of the inner and outer segment to the connection piece is possible. Furthermore, a cross-piece 47 with through-holes 471 connects the pressure side rim 46 with the suction side rim 45. This allows additional attachment of the connection piece 40 to the shear webs which extend along the inner segment and the outer segment. Between these three components, i.e. the pressure side rim 46, the suction side rim 45 and the cross-piece 47, openings 48 exist which enable access of the outer segment by the inner segment. This is important for servicing and initial joining of the inner segment and the outer segment.

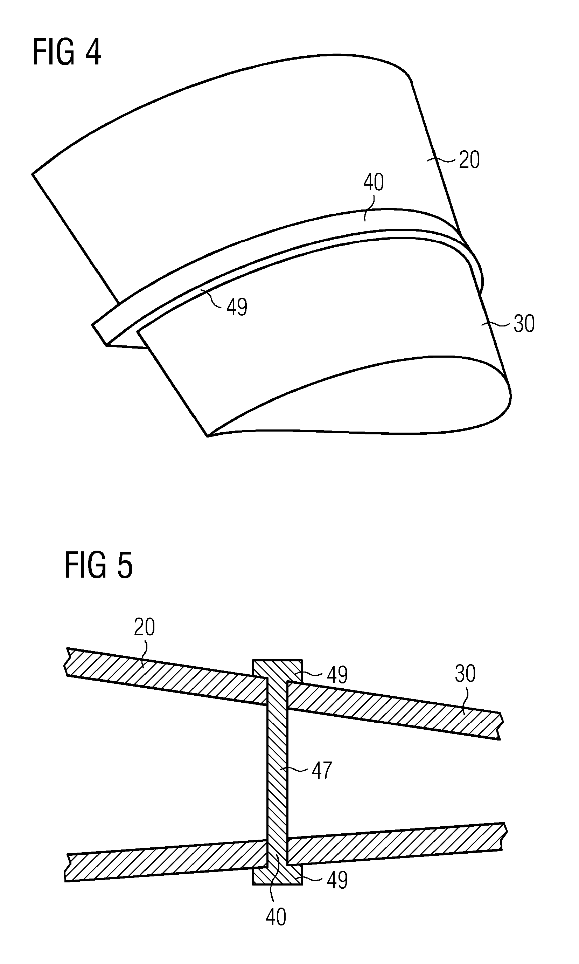

Figure 4 shows another embodiment of the invention. Again, the rotor blade comprises an inner segment 20 and an outer segment 30. These two segments 20, 30 are connected via a connection piece 40. In this embodiment, the connection piece 40 does not comprise any lifting bosses with attachment holes, but it features an elevated rim 49 which extends along the whole outer surface of the rotor blade. This elevated rim 49 enables the lifting device to grip onto the connection piece 40. In other words, it serves as a gripping surface and is shaped to fit around the lifting bracket, i.e. the connection piece 40. The lifting device may or may not rest also on the surfaces, in particular on the outer surfaces of the inner segment 20 and the outer segment 30.

Figure 5 shows a variant of the embodiment of the invention shown in Figure 4. Again, the connection piece 40 comprises an elevated rim 49. In this variant, the rim extends and overlaps the end sections of the inner segment 20 and the outer segment 30. This has the advantage that alignment of both segments 20, 30 is facilitated. For example, joining the two segments may involve the following steps: Providing the inner segment 20, connecting the connection piece 40 to the inner segment 20, and connecting the outer segment 30 to the connection piece 40. In the last step, joining and connecting the outer segment 30 with the connection piece 40 is facilitated as it can be rotated and aligned such that it fits with the elevated and overlapping rim 49 of the connection piece 40. In other words, there exists one and only one correct position between both segments 20, 30. A precise alignment is therefore ensured and facilitated.

## Claims

1. Rotor blade (10) of a wind turbine comprising an inner segment (20), an outer segment (30) and a connection piece (40),
wherein
- the inner segment (20) is defined as being the segment which is closer to the root (111) of the rotor blade (10) than the outer segment (30),
- each segment (20, 30) comprises an inner end section (21, 31) and an outer end section (22, 32),
- the inner end section (21, 31) of a segment (20, 30) is defined as being the section which is closer to the root (111) of the rotor blade (10) than the respective outer end section (22, 32),
- the connection piece (40) interconnects the outer end section (22) of the inner segment (20) with the inner end section (31) of the outer segment (30),
**characterized in that**
- the connection piece (40) comprises means for attaching a lifting device to the rotor blade (10),
- wherein the lifting device is destined for lifting the rotor blade (10).

2. Rotor blade (10) according to claim 1,
wherein the shape of the outer surface of the connection piece (40) substantially corresponds to the shape of the outer surface of the outer end section (22) of the inner segment (20) and to the shape of the outer surface of the inner end section (31) of the outer segment (30).

3. Rotor blade (10) according to one of the preceding claims,
wherein the cross section of the connection piece (40) corresponds to a lift-generating airfoil profile.

4. Rotor blade (10) according to one of the preceding claims,
wherein the connection piece (40) comprises a plurality of through-holes (451, 461, 471) for inserting connection means for interconnecting the inner segment (20), the outer segment (30) and the connection piece (40) with each other.

5. Rotor blade (10) according to one of the preceding claims,
wherein the connection piece (40) comprises
- a pressure side rim (46) with through-holes (461) for interconnection of the pressure side shells of the inner segment (20) and outer segment (30) with the connection piece (40), and/or
- a suction side rim (45) with through-holes (451) for interconnection of the suction side shells of the inner segment (20) and outer segment (30) with the connection piece (40).

6. Rotor blade (10) according to one of the preceding claims,
wherein the connection piece (40) comprises a cross-piece (47), in particular with through-holes (471), for interconnection of the shear webs of the inner segment (20) and outer segment (30) with the connection piece (40).

7. Rotor blade (10) according to one of the preceding claims,
wherein the connection piece (40) comprises at least a first attachment hole (42) for attaching the lifting device to the connection piece (40).

8. Rotor blade (10) according to claim 7,
wherein the first attachment hole (42) is located close to the leading edge (141) of the rotor blade (10).

9. Rotor blade (10) according to one of the preceding claims,
wherein the connection piece (40) comprises at least a second attachment hole (44) for attaching the lifting device to the connection piece (40),

10. Rotor blade (10) according to claim 9,
wherein the second attachment hole (44) is located close to the trailing edge (131) of the rotor blade (10).

11. Rotor blade (10) according to one of the preceding claims,
wherein the connection piece (40) comprises an elevated rim (49) such that the outer surface of the connection piece (40) is elevated with regard to the outer surface of the outer end section (22) of the inner segment (20) and the outer surface of the inner end section (31) of the outer segment (30).

12. Rotor blade (10) according to claim 11,
wherein the elevated rim (49) at least partly overlaps the outer end region of the inner segment (20) and/or the inner end region of the outer segment (30).

13. Wind turbine comprising at least one rotor blade (10) according to one of the preceding claims.
